# FASCICULE DE BREVET EUROPEEN

(11) **EP 3 933 183 B1**
(45) Date de publication et mention de la délivrance du brevet: **10.08.2022**
(21) Numéro de dépôt: 21177681.0
(22) Date de dépôt: 04.06.2021
(51) Int. Cl.: F02C 7/25, B64D 45/00

(54) **ENSEMBLE PROPULSIF D'UN AÉRONEF COMPRENANT UN SYSTÈME ANTI-INCENDIE AVEC UNE LIGNE DE DISTRIBUTION D'AGENT EXTINCTEUR**
ANTRIEBSSYSTEM EINES LUFTFAHRZEUGS, DAS EIN FEUERLÖSCHSYSTEM MIT EINER LÖSCHMITTELVERTEILUNGSLEITUNG UMFASST
PROPULSION ASSEMBLY OF AN AIRCRAFT COMPRISING A FIRE PROTECTION SYSTEM WITH A LINE FOR DISTRIBUTION OF FIRE EXTINGUISHING AGENT

(30) Priorité: 02.07.2020 FR 2007005
(43) Date de publication de la demande: 05.01.2022
(73) Titulaire: AIRBUS OPERATIONS (S.A.S.), 31060 Toulouse (FR)
(72) Inventeur: SOULIE, Adeline, 31060 TOULOUSE (FR); CAYSSIALS, Julien, 31060 TOULOUSE (FR); GUICHOT, Arnaud, 31060 TOULOUSE Cedex 9 (FR); BRACHET, Nicolas, 31060 TOULOUSE (FR)
(74) Mandataire: Gicquel, Olivier Yves Gérard

(56) Documents cités:
- DE-A1-102018 222 162
- FR-A1- 3 014 133
- FR-A1- 3 015 568

## Description

La présente invention concerne un ensemble propulsif d'aéronef comprenant un système anti-incendie avec une ligne de distribution pour la distribution d'un agent extincteur sous pression.

De manière connue, un ensemble propulsif fixé sous l'aile d'un aéronef comprend une turbomachine, un mât de fixation de la turbomachine à l'aéronef ainsi qu'un système anti-incendie pour détecter et éteindre un incendie survenant sur l'ensemble propulsif.

Le système anti-incendie contient deux réservoirs d'agent extincteur à ouverture commandée qui sont arrangés dans le mat, une ligne de distribution, sous forme de tuyauterie, reliant les réservoirs à des zones feu de la turbomachine, et un ensemble de détection et d'activation pour détecter un incendie et commander l'ouverture des réservoirs afin de déclencher l'émission d'agent extincteur à partir des réservoirs vers les zones feu au travers de la ligne de distribution.

L'espace disponible dans le mat pour le passage de la ligne de distribution du système anti-incendie est limité et contraint par la présence d'une pluralité de systèmes. Sur certains avions, il n'est pas possible de router la ligne de distribution de l'agent extincteur sans générer localement au moins un point bas.

La ligne de distribution étant une ligne en attente, celle-ci est remplie d'air ambiant qui pénètre depuis les zones feu. Cet air contient de l'humidité qui condense et s'accumule au niveau des point bas, et gèle lorsque l'aéronef vole à haute altitude, empêchant de ce fait le bon fonctionnement du système anti-incendie. Un dispositif de drainage, sous la forme d'un trou est, par conséquent, arrangé au niveau de chaque point bas pour évacuer, par gravité, l'eau qui pourrait s'y accumuler.

Un tel trou de drainage est efficace pour évacuer l'eau stagnante, mais en cas d'ouverture d'un réservoir, une partie de l'agent extincteur est perdu au travers de ce trou. Cela oblige à majorer le volume d'agent extincteur dans le réservoir pour compenser cette perte et conduit à des réservoirs plus volumineux et donc plus difficiles à intégrer dans le mât.

Il existe donc un besoin de trouver une solution à ce problème de perte d'agent extincteur au travers du dispositif de drainage afin de pouvoir réduire les dimensions des réservoirs et faciliter leur intégration dans le mat.

L'invention vise à répondre en tout ou partie à ce besoin et concerne un ensemble propulsif comprenant une turbomachine accrochée à un mat, et un système anti-incendie, tel que revendiqué dans la revendication 1. La demande de brevet FR3015568 décrit le préambule de la revendication 1.

Ainsi, à une pression proche de la pression atmosphérique (c'est-à-dire au sol ou en vol), l'eau issue de la condensation sera évacuée hors de ligne de distribution de sorte que des glaçons ne pourront pas se former. En revanche, l'agent extincteur sous pression ne sera pas évacué hors de la ligne de distribution. L'invention permet ainsi d'éviter la majoration du volume d'agent extincteur dans les réservoirs (visant à compenser la perte d'agent par le trou de drainage dans l'art antérieur) et donc de limiter le volume/la masse des réservoirs embarqués.

Les caractéristiques de l'invention mentionnées ci-dessus, ainsi que d'autres, apparaîtront plus clairement à la lecture de la description suivante d'un exemple de réalisation, ladite description étant faite en relation avec les dessins joints, parmi lesquels :

la figure 1, est une représentation schématique d'un ensemble propulsif d'un aéronef qui comprend une ligne de distribution d'agent extincteur sous pression selon l'invention;

la figure 2a est une vue en coupe d'un dispositif de drainage de la ligne de distribution de la figure 1, selon un premier mode de réalisation de l'invention ;

la figure 2b est une vue en perspective du dispositif de drainage représenté à la figure 2a;

la figure 3 est une vue similaire à la figure 2a, d'une coupe d'un dispositif de drainage de la ligne de distribution de la figure 1, selon un deuxième mode de réalisation de l'invention ;

la figure 4 est une vue similaire à la figure 2a, d'une coupe d'un dispositif de drainage de la ligne de distribution de la figure 1, selon un troisième mode de réalisation de l'invention ;

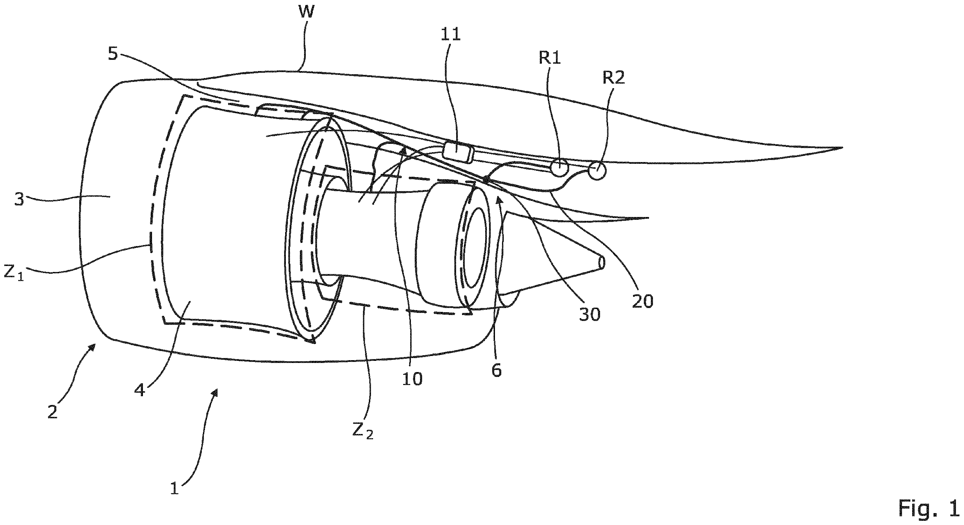

En référence avec la figure 1, un ensemble propulsif 1 est accroché sous l'aile W d'un aéronef (non représenté) et comporte une turbomachine 2 comprenant une nacelle 3 entourant un moteur 4, un mât 5 fixé à l'aile W et sous lequel est accrochée la turbomachine 2, ainsi qu'un système anti-incendie 6.

La turbomachine 2 comprend une pluralité de zones feu Z1, Z2, séparées entre elles par des parois et joints feu (non représentés) pour contenir un incendie dans les limites d'une zone feu et empêcher sa propagation vers une autre zone feu.

Le système anti-incendie 6 est prévu pour détecter et éteindre par l'envoi d'un agent extincteur, tout incendie qui pourrait survenir dans une des zones feu Z1, Z2. De manière classique, le système anti-incendie 6 contient deux réservoirs R1,R2 à ouverture commandée et contenant chacun un volume d'agent extincteur sous pression, une ligne de distribution 10 d'agent extincteur reliant chacun des réservoirs R1, R2 à des buses d'éjection (non représentés) d'agent extincteur situées dans les zones feu Z1, Z2, et une unité de détection et d'activation 11 pour détecter un incendie et commander l'ouverture des réservoirs R1, R2.

Chaque réservoir R1, R2 est situé dans le mât 5 et est équipé d'un système d'ouverture pour libérer l'agent extincteur hors du réservoir R1, R2. Le système d'ouverture (non représenté) est par exemple de type vanne papillon, ou percutable de type pyrotechnique.

L'unité de détection et d'activation 11, comprend une unité centrale à laquelle sont reliés une pluralité de capteurs incendie situés dans les zones feu Z1, Z2 pour détecter un incendie dans ces dernières, et l'unité centrale est, en outre, connecté aux systèmes d'ouverture des réservoirs pour en contrôler l'ouverture. L'unité de détection et d'activation 11 est connectée à des commandes et dispositifs de l'aéronef. A la détection d'un incendie, l'unité de détection et d'activation 11 envoie un signal d'alarme incendie à destination des pilotes. Le poste de pilotage comprend deux commandes d'activation, chacune étant associée à un unique réservoir R1, R2 et actionnable par le pilote pour envoyer un signal d'activation du réservoir associé à l'unité de détection. A l'activation d'une commande associée à un réservoir R1, R2, l'unité de détection et d'activation 11 envoie un signal d'ouverture au système d'ouverture du réservoir pour l'ouverture dudit réservoir R1, R2. Lorsqu'un réservoir R1, R2 est ouvert, l'agent extincteur libéré se déplace sous pression dans la ligne de distribution et est expulsé dans les zones feu Z1, Z2 au travers des buses d'éjection.

La ligne de distribution 10 comprend une tuyauterie constituée de tuyaux 20 connectés les uns aux autres pour assurer la circulation de l'agent extincteur. La ligne de détection 10 comprend un ou plusieurs points bas 21 (un seul représenté). Un point bas 21 est un point de la ligne de distribution 10 où des fluides ont tendance à s'accumuler du fait de la hauteur moindre de ce point par rapport aux points de la ligne de distribution 10 directement situés en amont et en aval du point bas 21. Les termes amont et aval étant choisis en fonction de la direction d'écoulement de l'agent extincteur dans la ligne de distribution, c'est-à-dire des réservoirs R1, R2 vers les buses.

De manière connue, la ligne de distribution 10 comprend un dispositif de drainage 30 arrangé au niveau de chaque point bas 21 avec un passage de fluide P permettant d'évacuer les fluides hors de la ligne de distribution 10.

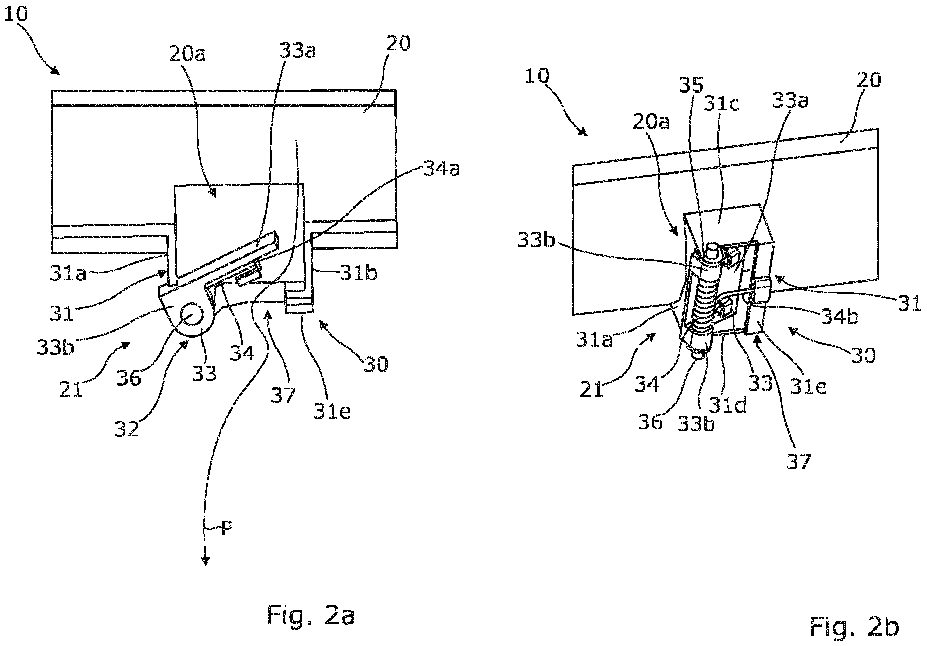

Selon l'invention, et en référence avec les figures 2a-b, le dispositif de drainage 30 comprend un châssis 31 fixé à un tuyau 20 ainsi qu'un mécanisme d'obturation 32 du passage de fluide P, fixé au châssis 31, qui comprend un dispositif mobile de type clapet mobile 33 et un moyen élastique 34 mécaniquement couplé au clapet 33.

Le châssis 31 a globalement une forme de boitier ouvert avec quatre parois latérales 31a-d parallèles deux à deux et une paroi plane 31e fixée aux quatre parois latérales et qui forme le fond du châssis 31. Les parois latérales 31a-d sont toutes fixées à la ligne de distribution 10, par exemple par soudure étanche, au niveau d'une ouverture 20a réalisée dans un tuyau 20 au droit du point bas 21.

Les parois latérales 31a-d s'étendent hors du tuyau, vers le bas de cette dernière, afin de ne pas gêner la circulation de l'agent extincteur. Le fond du châssis 31e se trouve ainsi à distance du tuyau 20.

Pour une paire de parois latérales 31c-d parallèles entre elles, chacune des parois latérales est pourvue d'un orifice traversant 35. Les orifices traversants 35 des deux parois latérales sont identiques et alignés. Un axe 36, dit broche, et insérée au travers des deux orifices traversants 35.

Le fond 31e comprend, quant à lui, une ouverture 37 pour permettre l'évacuation des liquides au niveau du point bas 21. Un fluide peut s'écouler par le passage de fluide P allant du tuyau 20 vers le dispositif de drainage 30 et qui comprend l'ouverture 20a réalisée dans le tuyau 20 au droit du point bas 21 puis l'ouverture 37 du fond 31e du châssis.

Le clapet 33 du mécanisme d'obturation 32 comprend un panneau 33a auquel sont fixées deux ferrures d'articulation 33b, reparties de part et d'autre de la largeur du panneau 33a, chacune étant munie d'un orifice (non représenté) pour le passage de la broche 36. Les ferrures d'articulation 33b sont emmanchées sur la broche 36 de sorte que le clapet 33 est monté en liaison pivot sur le châssis entre une position de repos dans laquelle il libère l'ouverture 37 du fond 31e et ouvre le passage de fluide P, et une position d'obturation dans laquelle il obture l'ouverture 37 et ferme le passage de fluide P empêchant ainsi l'écoulement d'un fluide hors de la ligne de distribution 10.

Le moyen élastique 34 est un ressort de torsion emmanché sur la broche 36 et arrangé entre les deux ferrures d'articulation 33b du clapet. Une première extrémité 34a du ressort est fixée au panneau 33a du clapet tandis qu'une seconde extrémité 34b du ressort est fixée sur le châssis 31, par exemple fixée sur le fond 31e du châssis comme illustré sur les figures 2a-b. Le ressort 34 est contraint de sorte que la position de repos du ressort 34 correspond à la position de repos du clapet 33, dans laquelle ce dernier libère l'ouverture 37 du fond 31e. En revanche, lorsque le clapet 33, à partir de sa position de repos, est rapproché de l'ouverture 37, c'est-à-dire lorsque la première extrémité du ressort 34a est rapprochée de la seconde extrémité 34b du ressort, le ressort 34 exerce une force qui tend à rappeler le clapet 33 vers sa position de repos.

En fonctionnement, lorsque la ligne de distribution 10 est remplie d'air ambiant (configuration normale où il n'y a pas de percussion d'un des réservoirs R1, R2), le ressort de torsion 34 contraint le clapet 33 dans une position de repos dans laquelle il libère l'ouverture du fond 31e et donc ouvre le passage de fluide P.

A l'inverse, lorsqu'un réservoir R1, R2 est percuté, la pression (aux alentours de 1000 psi) exercée par la libération hors du réservoir et le déplacement de l'agent extincteur sous pression dans la ligne de distribution 10 exerce une force sur le panneau 33a du clapet (et par conséquent sur le ressort de torsion 34) qui tend à déplacer ce dernier vers sa position d'obturation 33a. Cette force est supérieure à l'effort du ressort 34 (le ressort a été choisi selon ce critère) pour maintenir le clapet 33a dans sa position de repos, et le clapet 33 se déplace par conséquent dans sa position d'obturation.

Lorsque la pression dans la ligne de distribution 10 décroit (c'est-à-dire lorsque la totalité de l'agent extincteur d'un réservoir percuté a été libéré dans les zones feu Z1, Z2), la force exercée sur le clapet 33 diminue et le ressort de torsion 34 rappelle le clapet 33 vers sa position de repos. Le passage de fluide P est à nouveau ouvert pour l'évacuation des fluides autres que l'agent extincteur.

Le dispositif de drainage 30 permet ainsi de drainer l'eau qui pourrait s'accumuler au niveau du point bas 21 de la ligne de distribution 10 et d'éviter la formation d'un glaçon qui pourrait obturer la ligne de distribution 10. A compter de la percussion d'un réservoir R1,R2 et tant que la ligne de distribution 10 est mise sous pression, le dispositif de drainage 30 selon l'invention permet de limiter la perte d'agent extincteur.

L'invention permet ainsi d'éviter la majoration du volume d'agent dans les réservoirs R1, R2 (visant à compenser la perte d'agent par le trou de drainage dans l'art antérieur) et donc de limiter le volume/la masse des réservoirs embarqués.

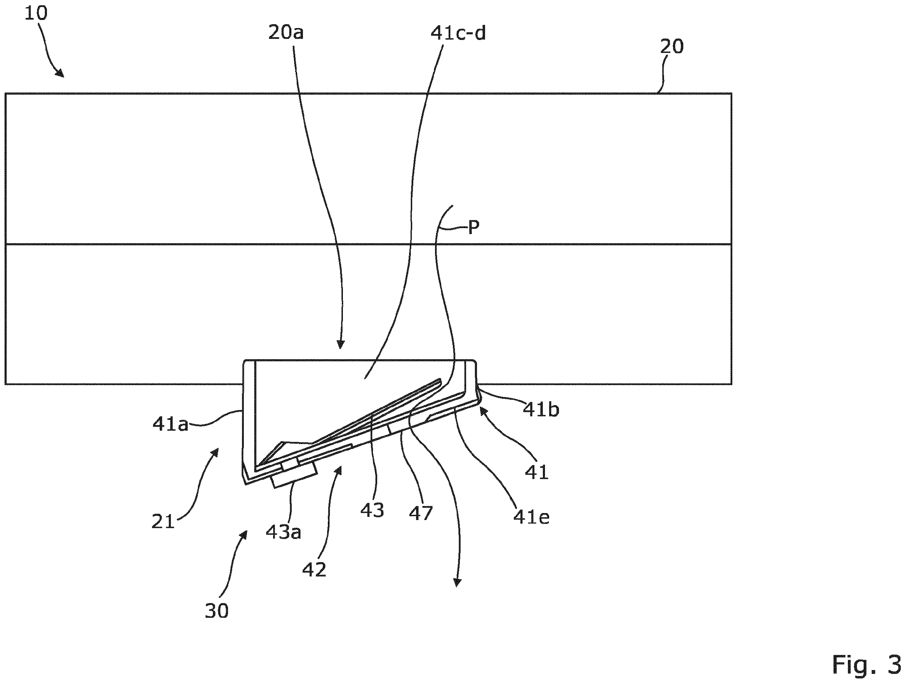

En référence avec la figure 3, et dans un autre mode de réalisation de l'invention, le dispositif de drainage 30 comprend un châssis 41 fixé à un tuyau 20 ainsi qu'un mécanisme d'obturation 42 du passage de fluide P, où le mécanisme d'obturation 42 comprend une lame ressort 43 fixée au châssis 41.

Dans ce mode de réalisation, le châssis 41 a globalement une forme de boitier ouvert avec quatre parois latérales 41a-d parallèles deux à deux et une paroi plane 41e fixée aux quatre parois latérales 41a-d et qui forme le fond du châssis 41.

Les parois latérales 41a-d sont toutes fixées au tuyau 20, par exemple par soudure étanche, au niveau d'une ouverture 20a réalisée dans le tuyau 20 au droit du point bas 21. Les parois latérales 41a-d s'étendent intégralement hors du tuyau 20, vers le bas de ce dernier, afin de ne pas gêner le passage de l'agent extincteur. Le fond 41e du châssis se trouve ainsi à distance du tuyau 20.

Le fond 41e du châssis et percé d'un orifice traversant 47 afin de former une ouverture permettant l'évacuation des liquides au niveau du point bas. Un fluide peut s'écouler par le passage de fluide P allant du tuyau 20 vers le dispositif de drainage 30 qui comprend l'ouverture 20a réalisée dans le tuyau 20 au droit du point bas 21 puis l'orifice traversant 47 du fond 41e du châssis.

La lame ressort 43 est arrangée à l'intérieur du châssis 41, c'est-à-dire entre les parois latérales 41a-d, et fixée au fond 41e du châssis. La fixation de la lame ressort 43 s'effectue via des moyens de fixations classiques, comme par exemple des rivets 43a. La lame ressort 43 s'étend en partie au-dessus du trou de drainage 47.

La lame ressort 43 est une bande mince flexible et est précontrainte dans une position de repos dans laquelle elle est courbée, vers le haut, par rapport au fond 41e et libère l'orifice traversant 47 pour ouvrir le passage de fluide P. La lame ressort 43 est mobile entre sa position de repos et une position d'obturation dans laquelle elle est plaquée contre le fond 41e et obture l'orifice traversant 47 pour fermer le passage de fluide P en empêchant, de ce fait, l'écoulement d'un fluide hors de la ligne de distribution 10.

En fonctionnement, lorsque la ligne de distribution est remplie d'air ambiant (configuration normale où il n'y a pas de percussion d'un des réservoirs), la lame ressort 43 est dans sa position de repos.

A l'inverse, lorsqu'un réservoir R1,R2 est percuté, la pression exercée par la libération hors du réservoir et le déplacement de l'agent extincteur sous pression dans la ligne de distribution 10 exerce une force sur la lame ressort 43 qui vient la plaquer contre le fond 41e, dans sa position d'obturation.

Lorsque la pression dans la ligne de distribution décroit, la contrainte exercée sur la lame ressort 43 diminue et cette dernière revient à sa position de repos. Le passage de fluide P est à nouveau ouvert pour l'évacuation des fluides autres que l'agent extincteur.

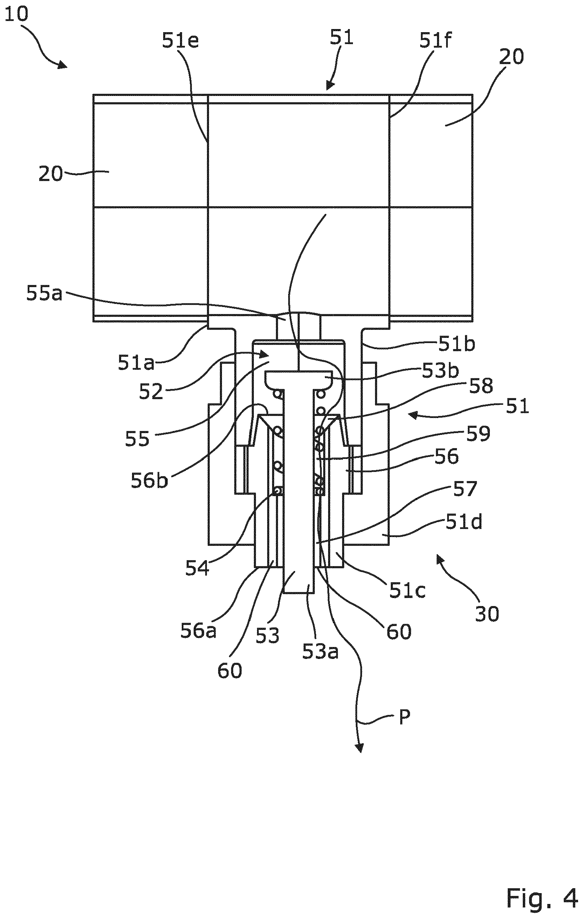

En référence avec la figure 4, et selon un troisième mode de réalisation de l'invention, le dispositif de drainage 30 comprend un châssis 51 ayant la forme d'un raccord avec un conduit de piquage 51b et le mécanisme d'obturation 52 du passage de fluide P comprend une soupape à tige 53, montée mobile dans le conduit de piquage 51b, ainsi qu'un moyen élastique 54 mécaniquement couplé à ladite soupape.

Le châssis 51, par exemple de type en T, comprend un corps principal 51a auquel est fixé le conduit de piquage 51b en faisant saillie hors du corps principal 51a, une pièce intermédiaire 51c arrangée en partie dans le conduit de piquage 51b et assurant le guidage de la soupape 53, ainsi qu'un écrou 51d pour assurer la fixation de la pièce intermédiaire 51c au conduit de piquage 51b.

Le corps principal 51a est creux, de forme cylindrique, et est connectée à un tuyau 20 de la ligne de distribution 10 par des moyens classiques, par exemple de type vissage ou soudage, à chacun de ses extrémités 51e-f.

Le conduit de piquage 51b, de forme cylindrique, comprend un alésage borgne 55 et un perçage traversant 55a réalisé au fond de l'alésage borgne. Le perçage 55a débouche dans le corps principal 51a en traversant la paroi externe dudit corps. Le conduit de piquage 51b s'étend en longueur vers le bas de sorte qu'un fluide arrivant dans le corps principal 51a est évacué hors du corps, sous l'effet de la gravité, au travers du perçage 55a. On notera que dans l'exemple de la figure 4, le conduit de piquage 51b s'étend en longueur selon une direction radiale du corps principal 51a.

La pièce intermédiaire 51c a une forme cylindrique et comprend un collet 56, placé approximativement à mi- longueur de la pièce intermédiaire 51c. En outre, la pièce intermédiaire 51c est usinée et comprend, au niveau de sa première extrémité 56a, un premier alésage 57 d'un diamètre sensiblement supérieur au diamètre de la tige de soupape 53a, et sur sa seconde extrémité 56b, une fraisure 58 suivie d'un second alésage 59 concentrique avec le premier alésage 57 et la fraisure 58 et ayant un diamètre supérieur au diamètre du premier alésage 57. Le premier alésage 57 débouche sur le second alésage 58 et la fraisure débouche sur le second alésage 58.

Le fond du second alésage 58 est percé d'une multitude d'orifices 60, dits orifices de décharge du drain, débouchants sur la première extrémité 56a de la pièce intermédiaire 51c, La fraisure 58 à une forme complémentaire à celle de la tête 53b de soupape pour former un siège de soupape.

Le pourtour du conduit de piquage 51b est fileté. La pièce intermédiaire 51c est insérée, en partie dans le conduit de piquage, dans l'alésage borgne 55, et est maintenue en place dans ce dernier par l'écrou 51d vissé sur le pourtour du conduit de piquage.

La pièce intermédiaire 51c est insérée, par sa seconde extrémité 56b, dans l'alésage 55 du conduit de piquage 51b et un premier épaulement du collet 56 vient en butée contre le bord du conduit de piquage 51b. L'écrou 51d comprend un épaulement qui vient s'appuyer contre un second épaulement du collet 55 pour maintenir la pièce intermédiaire 51c contre le bord du conduit de piquage 51b. Le contact entre la pièce intermédiaire 51c et le conduit de piquage 51b assure à lui seul l'étanchéité entre ces deux pièces.

Un fluide peut s'écouler par le passage de fluide P allant d'un tuyau 20 vers le dispositif de drainage 30 et qui comprend le perçage 55a réalisé au fond de l'alésage borgne 55 du conduit de piquage 51b, le siège de soupape 58, et les orifices de décharge du drain 60.

La soupape 53 a sa tige 53a reçue, en partie, dans le premier alésage 57 de la pièce intermédiaire 51c afin d'assurer son guidage en translation. La tête 53b de la soupape est arrangée entre le siège de soupape 58 et le fond de l'alésage borgne 55 du conduit de piquage.

La soupape 53 est monté en liaison glissière sur la pièce intermédiaire du châssis entre une position de repos dans laquelle sa tête 53b est à distance du siège de soupape 58, et une position d'obturation dans laquelle sa tête 53b ferme le siège de soupape 58 et ferme le passage de fluide P empêchant ainsi l'écoulement d'un fluide hors de la ligne de distribution 10.

Le moyen élastique 54 est un ressort de compression de forme hélicoïdale, dit ressort de levée, emmanché sur la tige 53a de la soupape 53 et reçu dans le second alésage 59 de la pièce intermédiaire. Une extrémité du ressort repose sur le fond du second alésage 59 de la pièce intermédiaire.

Le ressort de levée 54 est contraint de sorte que la position de repos du ressort correspond à la position de repos de la soupape 53. En revanche, lorsque la tête 53b de la soupape, à partir de la position de repos de ladite soupape, est rapprochée du siège de soupape 58, la contrainte du ressort rappelle la soupape 53 vers sa position de repos.

En fonctionnement, lorsque la ligne de distribution 10 est remplie d'air ambiant (configuration normale où il n'y a pas de percussion d'un des réservoirs), le ressort de levée 54 contraint la soupape dans une position de repos dans laquelle elle ouvre le siège de soupape 58 et, par conséquent, le passage de fluide P.

A l'inverse, lorsqu'un réservoir R1, R2 est percuté, la pression exercée par la libération hors du réservoir et le déplacement de l'agent extincteur sous pression dans la ligne de distribution 10 exerce une force sur la tête 53b de soupape (et par conséquent sur le ressort de levée 54) qui tend à déplacer cette dernière vers sa position d'obturation. Cette force est supérieure à l'effort du ressort de levée 54 pour maintenir la soupape 53 dans sa position de repos (le ressort a été choisi selon ce critère), et la soupape 53 se déplace par conséquent dans sa position d'obturation.

Lorsque la pression dans la ligne de distribution 10 décroit, la force exercée sur la soupape/ressort diminue et ce dernier rappelle la soupape 53 vers sa position de repos. Le passage de fluide P est à nouveau ouvert pour l'évacuation des fluides autres que l'agent extincteur.

En alternative (non représentée sur les figures) de ce mode de réalisation, au lieu d'un raccord en T, le châssis se présente sous la forme d'une bride de piquage. Dans ce cas, les différences par rapport à ce qui vient d'être décrit en relation avec la figure, sont que :
- le châssis comprend un corps principal arrangé autour d'un tuyau 20 (au lieu d'un corps principal servant de raccord entre deux tuyaux) ; et
- le conduit de piquage comprend un perçage qui débouche dans le tuyau (et non pas dans le corps principal) et traverse la paroi d'un tuyau.

## Revendications

1. Ensemble propulsif (1) comprenant une turbomachine (2) accrochée à un mat (5), et un système anti-incendie (6), la turbomachine (2) comprenant une pluralité de zones feu (Z1, Z2), le système anti-incendie (6) comprenant deux réservoirs (R1, R2) d'agent extincteur sous pression situés dans le mat (5) et une ligne de distribution reliant chacun des réservoirs (R1, R2) à des buses situées dans les zones feu (Z1, Z2), la ligne de distribution (10) comprenant un ensemble de tuyaux (20) connectés les uns aux autres et présentant au moins un point bas (21) entre les réservoirs (R1, R2) et les buses, et pour chaque point bas, un dispositif de drainage de fluide (30) pour l'évacuation d'un fluide hors de la ligne de distribution (10), caractérisé en que le dispositif de drainage (30) comprend un passage de fluide (P) pour l'évacuation du fluide vers l'extérieur de la ligne de distribution (10) et un mécanisme d'obturation (32, 42, 52) du passage de fluide (P), ledit mécanisme (32, 42, 52) étant mobile sous l'effet de la pression régnant dans la ligne de distribution (10), entre une première position en attente dans laquelle il ouvre le passage de fluide (P) et une seconde position dans laquelle il ferme le passage de fluide (P), la seconde position étant atteinte lorsque la pression dans la ligne de distribution (10) est supérieure ou égale à une pression prédéterminée.

2. Ensemble propulsif (1) selon la revendication 1, **caractérisé en ce que** le mécanisme d'obturation (32, 42, 52) comprend un dispositif mobile (33,53) entre une position de repos dans laquelle il ouvre le passage de fluide (P) et une position d'obturation dans laquelle il ferme le passage de fluide (P).

3. Ensemble propulsif (1) selon la revendication 2, **caractérisé en ce que** le dispositif de drainage (30) comprend un châssis (31,41,51) fixé à au moins un tuyau (20) et sur lequel est fixé le mécanisme d'obturation (32, 42, 52) .

4. Ensemble propulsif (1) selon la revendication 3, **caractérisé en ce que** le mécanisme d'obturation (42) est une lame ressort (43).

5. Ensemble propulsif (1) selon la revendication 3, **caractérisé en ce que** le mécanisme d'obturation (32,52) comprend un moyen élastique (34,54) mécaniquement couplé au dispositif mobile (33,53) pour rappeler ledit dispositif dans sa position de repos.

6. Ensemble propulsif (1) selon la revendication 5, **caractérisé en ce que** le dispositif mobile est un clapet (33) monté en liaison pivot sur le châssis (31) et le moyen élastique (34) est un ressort de torsion fixé au clapet (33) ainsi qu'au châssis (31).

7. Ensemble propulsif (1) selon la revendication 5, **caractérisé en ce que** le dispositif mobile est une soupape (53) montée mobile en translation dans le châssis (51) et le moyen élastique est un ressort (54) emmanché sur la soupape.

## Patentansprüche

1. Antriebsanordnung (1), die ein Turbotriebwerk (2), das an einem Pylon (5) angebracht ist, und ein Feuerlöschsystem (6) umfasst, wobei das Turbotriebwerk (2) mehrere Feuerzonen (Z1, Z2) umfasst, wobei das Feuerlöschsystem (6) zwei Reservoirs (R1, R2) von unter Druck stehendem Löschmittel, die sich in dem Pylon (5) befinden, und eine Verteilerleitung, die jedes der Reservoirs (R1, R2) mit in den Feuerzonen (Z1, Z2) befindlichen Düsen umfasst, wobei die Verteilerleitung (10) eine Anordnung aus Rohren (20) umfasst, die miteinander verbunden sind und mindestens einen Tiefpunkt (21) zwischen den Reservoirs (R1, R2) und den Düsen und für jeden Tiefpunkt eine Fluidablassvorrichtung (30) zum Abführen des Fluids aus der Verteilerleitung (10) aufweisen, **dadurch gekennzeichnet, dass** die Ablassvorrichtung (30) einen Fluidkanal (P) zum Abführen von Fluid nach außerhalb der Verteilerleitung (10) und einen Mechanismus (32, 42, 52) zum Sperren des Fluidkanals (P) umfasst, wobei der Mechanismus (32, 42, 52) unter der Wirkung des in der Verteilerleitung (10) herrschenden Drucks zwischen einer ersten Bereitschaftsstellung, in der er den Fluidkanal (P) öffnet, und einer zweiten Stellung, in der er den Fluidkanal (P) schließt, beweglich ist, wobei die zweite Stellung erreicht wird, wenn der Druck in der Verteilerleitung (10) größer gleich einem vorbestimmten Druck ist.

2. Antriebsanordnung (1) nach Anspruch 1,
**dadurch gekennzeichnet, dass** der Sperrmechanismus (32, 42, 52) eine Vorrichtung (33, 53) umfasst, die zwischen einer Ruhestellung, in der sie den Fluidkanal (P) öffnet, und einer Sperrstellung, in der sie den Fluidkanal (P) schließt, beweglich ist.

3. Antriebsanordnung (1) nach Anspruch 2, **dadurch gekennzeichnet, dass** die Ablassvorrichtung (30) ein Chassis (31, 41, 51) umfasst, das an mindestens einem Rohr (20) fixiert ist und an dem der Sperrmechanismus (32, 42, 52) fixiert ist.

4. Antriebsanordnung (1) nach Anspruch 3, **dadurch gekennzeichnet, dass** der Sperrmechanismus (42) ein Federblatt (43) ist.

5. Antriebsanordnung (1) nach Anspruch 3, **dadurch gekennzeichnet, dass** der Sperrmechanismus (32, 52) ein elastisches Mittel (34, 54) umfasst, das dahingehend mit der beweglichen Vorrichtung (33, 53) mechanisch gekoppelt ist, die Vorrichtung in ihre Ruhestellung zurückzuführen.

6. Antriebsanordnung (1) nach Anspruch 5, **dadurch gekennzeichnet, dass** die bewegliche Vorrichtung eine Klappe (33), die in Schwenkverbindung an dem Chassis (31) befestigt ist, ist und das elastische Mittel (34) eine Torsionsfeder ist, die sowohl an der Klappe (33) als auch an dem Chassis (31) fixiert ist.

7. Antriebsanordnung (1) nach Anspruch 5, **dadurch gekennzeichnet, dass** die bewegliche Vorrichtung ein Ventil (53), das translatorisch beweglich in dem Chassis (51) befestigt ist, ist und das elastische Mittel eine Feder (54) ist, die auf das Ventil aufgebracht ist.

## Claims

1. Propulsion assembly (1) comprising a turbomachine (2) attached to a pylon (5), and a fire-fighting system (6), the turbomachine (2) comprising a plurality of fire zones (Z1, Z2), the fire-fighting system (6) comprising two reservoirs (R1, R2) of pressurized extinguishing agent that are situated in the pylon (5) and a distribution line that connects each of the reservoirs (R1, R2) to nozzles situated in the fire zones (Z1, Z2), the distribution line (10) comprising a set of pipes (20) that are connected to one another and having at least one low point (21) between the reservoirs (R1, R2) and the nozzles, and, for each low point, a fluid drainage device (30) for evacuating a fluid from the distribution line (10), **characterized in that** the drainage device (30) comprises a fluid passage (P) for evacuation of the fluid out of the distribution line (10) and a mechanism (32, 42, 52) for shutting off the fluid passage (P), said mechanism (32, 42, 52) being able to move under the effect of the pressure prevailing in the distribution line (10), between a first standby position in which it opens the fluid passage (P) and a second position in which it closes the fluid passage (P), the second position being reached when the pressure in the distribution line (10) is greater than or equal to a predetermined pressure.

2. Propulsion assembly (1) according to Claim 1, **characterized in that** the shut-off mechanism (32, 42, 52) comprises a device (33, 53) that is able to move between a rest position in which it opens the fluid passage (P) and a shut-off position in which it closes the fluid passage (P).

3. Propulsion assembly (1) according to Claim 2, **characterized in that** the drainage device (30) comprises a chassis (31, 41, 51) that is fastened to at least one pipe (20) and to which the shut-off mechanism (32, 42, 52) is fastened.

4. Propulsion assembly (1) according to Claim 3, **characterized in that** the shut-off mechanism (42) is a spring leaf (43).

5. Propulsion assembly (1) according to Claim 3, **characterized in that** the shut-off mechanism (32, 52) comprises an elastic means (34, 54) that is mechanically coupled to the mobile device (33, 53) so as to return said device to its rest position.

6. Propulsion assembly (1) according to Claim 5, **characterized in that** the mobile device is a shutter (33) mounted in a pivot connection on the chassis (31) and the elastic means (34) is a torsion spring fastened to the shutter (33) and to the chassis (31) .

7. Propulsion assembly (1) according to Claim 5, **characterized in that** the mobile device is a valve (53) mounted so as to be able to move in translation in the chassis (51) and the elastic means is a spring (54) fitted onto the valve.
